# EUROPEAN PATENT APPLICATION

(11) **EP 1 759 925 A1**
(43) Date of publication of application: **07.03.2007**
(21) Application number: 05704300.2
(22) Date of filing: 25.01.2005
(51) Int. Cl.: B60R 1/06

(54) **PARTIAL CURVED ON-VEHICLE REAR VIEW MIRROR**

(30) Priority: 26.01.2004 JP 2004000847 U
(71) Applicant: Wada, Fumio, Kitakyushu City Fukuoka 802-0973 (JP)
(72) Inventor: Wada, Fumio, Kitakyushu City Fukuoka 802-0973 (JP)
(74) Representative: Klunker . Schmitt-Nilson . Hirsch
(86) International application number: PCT/JP2005/001304
(87) International publication number: WO 2005/070724

(57) **Abstract**

A partial curved on-vehicle rear view mirror,
wherein a center main portion (1) is formed in a flat surface, but an outer portion (2) is formed in a gentle convex surface toward the outside, a lower portion (4) is also formed in a gentle convex surface toward the lower side, and an inner portion (3) is also formed in a convex surface toward the inside so that the view of the mirror can be safely and efficiently increased in each direction. Since the center main portion (1) is formed in the flat surface, the safety of the operations of automobiles, motorcycles, and so on can be sufficiently increased by sufficiently expanding the rear view to the sides and also expanding the view in the lower side while sufficiently securing visual stability.

## Description

### Technical Field

The present invention relates to an on-vehicle rear view mirror wherein the field of view is increased by using a flat surface and a curved surface together.

### Background Art

Conventionally, an on-vehicle rear view mirror has a flat surface or a very slightly gentle convex surface, and the angle of the rear and side view of the mirror is about 35-40 degrees. However, since this angle is not wide enough, when driving a driver can not sufficiently recognize other vehicles being laterally close to his vehicle in the back side, and when crossing over a traffic lane the car is likely to collide to the other and the danger of collision always exists. Moreover, when using a rear view mirror formed uniformly convex in the whole surface which is often used in a bicycle, the rear view angle is sufficiently secured, but the stability of visual sense at the time of drive is lacked.

Moreover, conventionally, there have been known applications of inventions regarding a rear view mirror using a curved surface, for example, an idea of varying a curvature of a curved surface, an idea of forming only an outer portion of a rear view mirror into a convex surface, and so on. However, those ideas are not the best because those can not distinguish really necessary elements and unnecessary elements.

### Disclosure of the Invention

A center main portion of the rear view mirror is formed in a flat surface or in a very slightly gentle convex surface, whereby the stability of visual sense at the time of drive is secured.

An outer portion of that is formed in a gentle convex surface toward the outside, whereby the rear and side view is expanded to the sides. An inner portion of that is formed in a convex surface toward the inside, whereby the inner view and the total sum of the viewing angle of the mirror to the sides are expanded, and a margin in the view is secured. A lower portion of that is formed in a gentle convex surface toward the lower side, whereby the lower view is expanded.

The present invention provides a partial curved on-vehicle rear view mirror comprising the above mentioned composition, wherein the stability of visual sense during a drive is secured, the rear and side view is sufficiently secured, the viewing angle toward the lower side is sufficiently secured, and the safety at the time of drive of an automobile, a motorbike and so on is increased.

### Brief Description of the Drawings

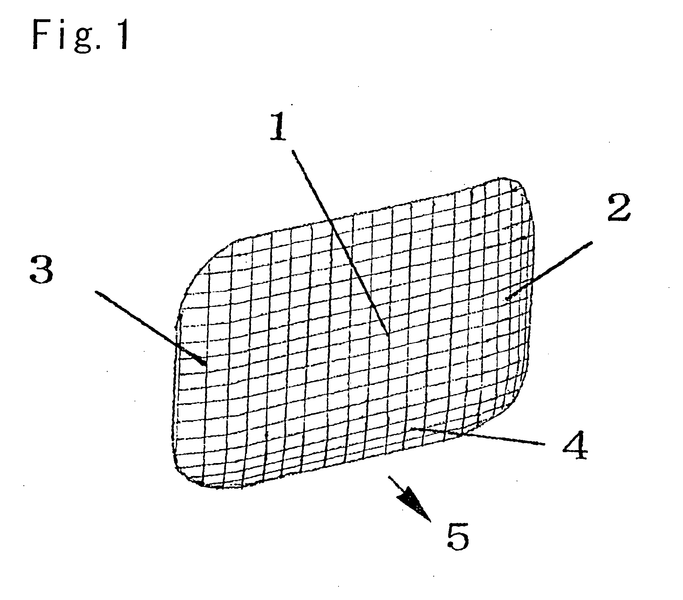

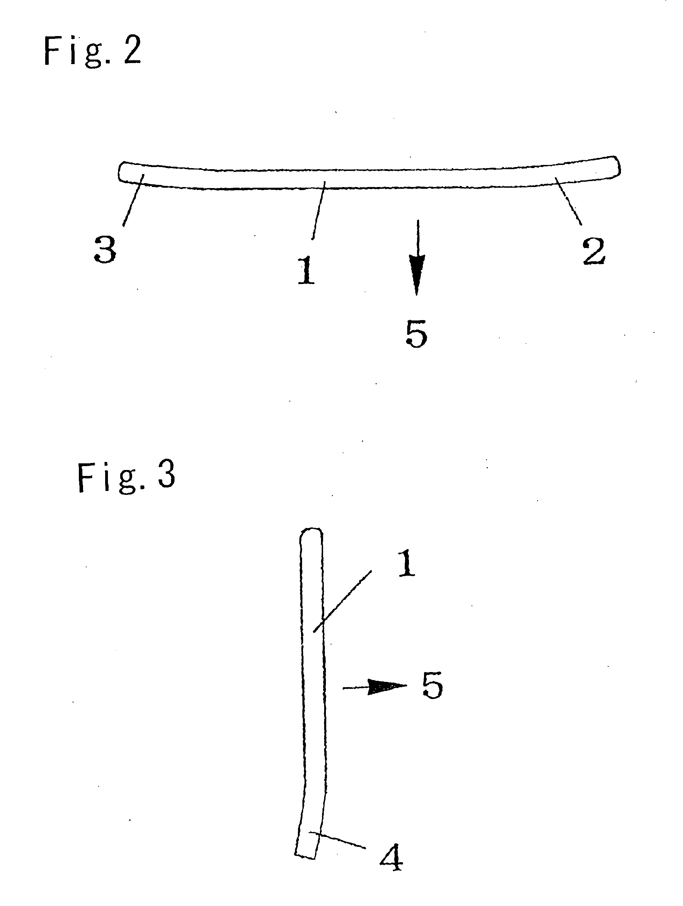

FIG. 1 is a perspective view illustrating a right-side rear view mirror viewed from the position of driver's eyes which is one of the partial curved on-vehicle rear view mirrors mentioned in claim 4. FIG. 1 is illustrated on the assumption that squares are drawn on the surface of the mirror. FIG. 2 is a horizontal cross section view of the right-side rear view mirror in FIG. 1 which includes the center of the mirror. FIG. 3 is a vertical cross section view of the right-side rear view mirror in FIG. 1 which includes the center of the mirror.

### Best Mode for Carrying Out the Invention

The fixtures of the mode of a rear view mirror of a vehicle, for example an automobile and a motorcycle, in which the present invention is embodied is explained below.

As shown in FIG. 1, a center main portion 1 of the rear view mirror is formed in a flat surface or in a very slightly gentle convex surface which is felt almost flat. The direction of the surface of the mirror is indicated by Number 5.

The outer portion 2 is formed in a gentle convex surface toward the outside. The horizontal size of the outer portion 2 is about 10 - 40 percent of the whole horizontal size of the rear view mirror. The angle between the surface of the center main portion and the surface of the outside edge of the outer portion is about 7 - 15 degrees.

The inner portion 3 is formed in a gentle convex surface toward the inside. The horizontal size of the inner portion 3 is about 10 or less percent of the whole horizontal size of the rear view mirror. The angle between the surface of the center main portion and the surface of the inside edge of the inner portion is about 3 - 7 degrees.

The lower portion 4 is formed in a gentle convex surface toward lower side. The vertical size of the lower portion 4 is about 10 - 20 percent or 10 or less percent of the whole vertical size of the rear view mirror. The angle between the surface of the center main portion and the surface of the lower edge of the lower portion is about 3 - 7 degrees.

The principal members of the rear view mirror are made of ,for example, plastics, glasses, metals, or ceramics. The viewing surface of the rear view mirror is made to a mirror-smooth state, and the reverse surface of the rear view mirror is formed in a flat surface or in the shape to fit into mounting devices and so on.

### Industrial Applicability

Since the center main portion of the on-vehicle rear view mirror is formed in a flat or substantially flat surface, the visual stability during a drive can be sufficiently secured. And since the outer portion is formed in a gentle convex surface so that the rear and side view can be expanded, the check of other vehicles existing just beside which is most important during crossing a traffic lane can be certaily performed. Therefore, the safety of the operations of automobiles and so on can be sufficiently increased.

In the present invention, although the outer portion is formed in a gentle convex surface, the visual stability is not damaged. In prior art wherein a rear view mirror is formed in a flat surface, the view reflected by the outer portion of the mirror during a drive is such as a flushing image which is not obvious to recognize clearly and is needed only to recognize existence of some body such as vehicle.

When the inner portion is formed in a convex surface, the angle of the whole view is expanded to the sides and a margin of safety drive is generated. Moreover, because the inner portion of the mirror is formed in a convex surface, it can be easily avoided that a driver loses a just behind image in his sight. In prior art wherein a rear view mirror is formed in a flat surface, when a driver's head is moved toward the inside, a just behind spot at the back corner of the vehicle is easily hidden from view, and a blind spot is generated.

When the lower portion of the rear view mirror is formed in a gentle convex surface, the angle of the view in the lower side is expanded, and the check of a projection on the ground can be easily performed, whereby it can be easily prevented to strike the projection during a drive to the back and so on.

As described above, the angle of the view of the rear view mirror can be efficiently secured in each direction, whereby an apparatus for remote controlling to move the angle of a surface of a rear view mirror becomes almost unnecesarry, further, depending on the circumstances, it becomes possible to eliminate about 10 percent area of the surface of the rear view mirror from the surface of that.

Moreover, because the rear and side view of the rear view mirror is efficiently safely and sufficiently expanded, the sensitivity regarding the rear and side view during a drive is vastly improved, whereby drivers can have senses that safety drive with feeling of ease is always obtained, and accidents between vehicles will highly decrease. That the rear and side view of the rear view mirror is always sufficiently secured is very important, because vehicles are often abruptly reflected in the rear and side view of the rear view mirror at a moment such as a ten-thousandth second.

## Claims

1. A partial curved on-vehicle rear view mirror,
wherein a center main portion (1) is formed in a flat surface or in very slightly convex, and an outer portion (2) is formed in a gentle convex surface toward the outside.

2. A partial curved on-vehicle rear view mirror,
wherein a center main portion (1) is formed in a flat surface or in very slightly convex, and an inner portion (3) is formed in a convex surface toward the inside.

3. A partial curved on-vehicle rear view mirror,
wherein a center main portion (1) is formed in a flat surface or in very slightly convex, and a lower portion (4) is formed in a gentle convex surface toward the lower side.

4. A partial curved on-vehicle rear view mirror,
wherein a center main portion (1) is formed in a flat surface or in very slightly convex, and an outer portion (2), an inner portion (3), and a lower portion (4) are respectively formed in a gentle convex surface toward each direction of the portions, so that the feature of claim 1, claim 2, and claim 3 are comprised.

5. A partial curved on-vehicle rear view mirror,
wherein a center main portion is formed in a flat surface or in very slightly convex, and an outer portion (2) and a lower portion (4) are respectively formed in a gentle convex surface toward each direction of the portions, so that the feature of claim 1 and claim 3 are comprised.
